# EUROPÄISCHE PATENTSCHRIFT

(11) **EP 3 574 228 B1**
(45) Veröffentlichungstag und Bekanntmachung des Hinweises auf die Patenterteilung: **03.06.2020**
(21) Anmeldenummer: 18703251.1
(22) Anmeldetag: 25.01.2018
(51) Int. Cl.: F16D 65/04

(54) **BREMSBACKE, SYSTEM ZUM MODULAREN ZUSAMMENSETZEN EINER BREMSBACKE, BREMSVORRICHTUNG UND VERFAHREN ZUR HERSTELLUNG EINER BREMSBACKE**
BRAKE SHOE, SYSTEM FOR MODULAR ASSEMBLY OF A BRAKE SHOE, BRAKE APPARATUS AND METHOD FOR PRODUCING A BRAKE SHOE
MÂCHOIRE DE FREIN, SYSTÈME D'ASSEMBLAGE MODULAIRE D'UNE MÂCHOIRE DE FREIN, DISPOSITIF DE FREINAGE ET PROCÉDÉ DE FABRICATION D'UNE MÂCHOIRE DE FREINAGE

(30) Priorität: 26.01.2017 DE 102017101525
(43) Veröffentlichungstag der Anmeldung: 04.12.2019
(73) Patentinhaber: SAF-HOLLAND GmbH, 63856 Bessenbach (DE)
(72) Erfinder: HARTMANN, Mark, 63834 Sulzbach am Main (DE)
(74) Vertreter: Müller Schupfner & Partner Patent- und Rechtsanwaltspartnerschaft mbB
(86) Internationale Anmeldenummer: PCT/EP2018/051834
(87) Internationale Veröffentlichungsnummer: WO 2018/138203

(56) Entgegenhaltungen:
- WO-A1-92/17713
- DE-A1- 4 140 220
- FR-A5- 2 084 328
- GB-A- 1 089 955
- US-A- 2 451 326
- US-A- 3 013 637

## Beschreibung

Die vorliegende Erfindung betrifft eine Bremsbacke, ein System zum modularen Zusammensetzen einer Bremsbacke, eine Bremsvorrichtung und ein Verfahren zur Herstellung einer Bremsbacke.

Bremsvorrichtungen, wie z. B. Trommelbremsen oder Scheibenbremsen, sind aus dem Stand der Technik hinlänglich bekannt. In einem Bremszustand wird dabei ein an einem Bremsbelagsträger angebrachter Bremsbelag gegen ein Widerlager, beispielsweise eine Bremstrommel oder einer Scheibe, gepresst, woraufhin ein Reibwiderstand zwischen dem Bremsbelag und dem Widerlager einer Rotation des Widerlagers entgegengewirkt. Durch dieses Entgegenwirken lässt sich ein drehfest mit dem Widerlager verbundenes Rad, insbesondere Nutzfahrzeugrad, abbremsen. Um gewisse Eigenschaften im Bremsverhalten einzustellen, kennt der Stand der Technik weiterhin Bremsbeläge, deren Eigenschaften durch das Belagsmaterial gezielt gesteuert werden, indem bestimmte Belagsmischung genutzt werden, um gewünschte Eigenschaften zu verstärken. Hierbei wird üblicherweise das Belagsmaterial auf einen Bremsbelagsträger, z. B. in Form einer gegossenen Rückenplatte oder auf eine Stahlrückenplatte, aufgebracht, wobei der Bremsbelag und der Bremsbelagsträger zusammen eine Bremsbacke bilden. Allerdings ist man beim Einstellen der Eigenschaften des gefertigten Bremsbelags eingeschränkt, da oftmals Kompromisse aus den gemischten Belagsmaterialien erforderlich sind.

Die FR 2 084 328 A5 betrifft eine hydraulisch betätigte Scheibenbremse mit Radbremszylindern, die mindestens auf einer Seite in einem Bügel nebeneinander angeordnet sind und deren Kolben auf die Bremsbelagsgrundplatte einwirken und den Belag in einen Reibschluss mit einer sich drehenden Scheibe drücken.

Die GB 1 089 955 A betrifft einen Bremsbelag für Scheibenbremsen umfassend zumindest ein Abstandselement, welches Federbelastet ist.

Die US 3 013 637 A betrifft eine Trommelbremsvorrichtung, wobei die Bremsschuhe mehrere Bremsbeläge aufweisen.

Die DE 41 40 220 A1 zeigt ein Bremsklotz für Scheibenbremsen, welcher mit Reibflächen mit unterschiedlichen Reibwerten versehen ist.

Die US 2 451 326 A offenbart eine Bremsbacke gemäß dem Oberbegriff des Anspruchs 1.

Es ist eine Aufgabe der vorliegenden Erfindung eine Bremsbacke mit Bremsbelägen bereitzustellen, die gegenüber den aus dem Stand der Technik bekannten verbessert ist und insbesondere in Hinblick auf die Anpassung eines Reibprofils an unterschiedliche Lastfälle optimiert ist.

Diese Aufgabe wird gelöst durch eine Bremsbacke gemäß Anspruch 1, durch ein System zum modularen Zusammensetzen einer Bremsbacke gemäß Anspruch 12, einer Bremsvorrichtung gemäß Anspruch 13 und einem Verfahren gemäß Anspruch 14. Weitere Vorteile und Merkmale der Erfindung ergeben sich aus den Unteransprüchen sowie der Beschreibung und den beigefügten Figuren.

Erfindungsgemäß ist eine Bremsbacke mit Bremsbelägen für eine Bremsvorrichtung, insbesondere eine Trommelbremse oder Scheibenbremse, vorgesehen, umfassend ein Trägerelement und ein am Trägerelement montierbares erstes Bremsbelagssegment und ein am Trägerelement montierbares zweites Bremsbelagssegment, wobei das erste Bremsbelagssegment und das zweite Bremsbelagssegment unterschiedlich ausgebildet sind, insbesondere sich zur Ausbildung eines Reibprofils, insbesondere eines lastsituationsabhängigen Reibprofils, in Hinblick auf Materialzusammensetzung, Kraftbeaufschlagung und/oder Form voneinander unterscheiden. Gegenüber dem Stand der Technik lassen sich durch die erfindungsgemäße Anpassung des ersten Bremsbelagssegments und des zweiten Bremsbelagssegments unterschiedliche Verhaltensweisen in Bezug auf Leistung und Verschleiß des ersten Bremsbelagssegments und des zweiten Bremsbelagssegments erzeugen bzw. veranlassen. Insbesondere sind das erste Bremsbelagssegment und das zweite Bremsbelagssegment derart ausgestaltet, dass sich das Reibprofil des ersten Bremsbelagssegments und des zweiten Bremsbelagssegments im Betrieb der Bremsvorrichtung einstellen, beispielsweise passiv durch unterschiedliche Reibgeschwindigkeiten, die auf das erste Bremsbelagssegment und das zweite Bremsbelagssegment wirken, oder aktiv durch unterschiedliche auf das erste Bremsbelagssegment und das zweite Bremsbelagssegment wirkende Kräfte. Vorstellbar ist auch, dass sich das erste Bremsbelagssegment und das zweite Bremsbelagssegment in Hinblick auf ihre Qualität bzw. ihr Leistungsvermögen unterscheiden. Insbesondere versteht der Fachmann unter einem Reibprofil eine räumlich Variation eines Reibwiderstands, der sich zwischen dem Widerlager und der Bremsbacke ausbildet und sich vorzugsweise über eine Bremsbelagsseite der Bremsbacke erstreckt. Dabei ist es vorstellbar, dass sich die Reibwerte auf der Bremsbelagsseite der Bremsbacke entlang einer Reibrichtung und/oder senkrecht zur Reibrichtung verändern, wobei die Reibrichtung festgelegt ist durch die Bewegung des Bremsbelags relativ zu dem Widerlager. Insbesondere ist es vorgesehen, dass sich das Reibprofil zeitlich ändert. Besonders bevorzugt ist es vorgesehen, dass sich das Reibprofil abhängig von einer Lastsituation ändert. Mit anderen Worten unterscheidet sich das Reibprofil bei einem intensiven Bremsvorgang, insbesondere oberhalb einer kritischen Bremsintensität, von dem Reibprofil bei einem weniger intensiven Bremsvorgang, insbesondere unterhalb der kritischen Bremsintensität. Insbesondere ist unter einer lastsituationsabhängigen Ausbildung des Reibprofils zu verstehen, dass sich das Verhältnis zwischen einem Reibwert, der dem ersten Bremsbelagssegment zugeordnet ist, und einem Reibwert, der dem zweiten Bremsbelagssegmentzugeordnet ist, abhängig von der Lastsituation oder Betriebssituation ändert, vorzugsweise von einem Wert unterhalb von 1 zu einem Wert oberhalb von 1 wechselt. Beispielsweise ändert sich dieses Verhältnis um einen Faktor zwischen 2 und 10, besonderes bevorzugt zwischen 1,5 und 7,5 und besonders bevorzugt um einen Faktor zwischen 1 und 2,5. Dadurch lässt sich eine Abnutzung des zweiten Bremsbelagssegments in vorteilhafter Weise auf bestimmte Situationen einschränken. Gleichzeitig kann durch die besagte Wahl beim Übergang zwischen Situationen, die sich in Hinblick auf die Beiträge der einzelnen Bremsbelagssegmente unterscheiden, dafür gesorgt werden, dass die Bremskraft nicht sprunghaft ansteigt, wenn die kritische Bremsintensität überschritten wird. Vorstellbar ist es dabei, dass das erste Bremsbelagssegment und das zweite Bremsbelagssegment miteinander in Kontakt stehen, beispielsweise aneinander anliegen.

Gemäß einer besonders bevorzugten Ausführungsform ist es vorgesehen, dass das erste Bremsbelagssegment und das zweite Bremsbelagssegment in einem montierten Zustand zueinander beabstandet sind. Durch die Beabstandung zwischen dem ersten Bremsbelagssegment und dem zweiten Bremsbelagssegment lassen sich das erste Bremsbelagssegment und das zweite Bremsbelagssegment in vorteilhafter Weise individuell ansteuern bzw. auslegen. Zudem wird ein Austauschen des ersten Bremsbelagssegments bzw. des zweiten Bremsbelagssegments vereinfacht. Außerdem können das erste Bremsbelagssegment und das zweite Bremsbelagssegment als modularer Bausatz zum Anpassen des Reibprofils in unterschiedlichen Materialzusammensetzungen und Bauformen bereitgestellt werden und einfach an dem Trägerelement montiert oder ausgetauscht werden. Dadurch können durch eine gezielte Anpassung und Auswahl des erstes Bremsbelagssegments und des zweiten Bremsbelagssegments in vorteilhafter Weise die Herstellungskosten reduziert werden, ohne dass ein signifikanter Bremskraftverlust zu befürchten ist.

Vorzugsweise ist es vorgesehen, dass ein Beitrag des ersten Bremsbelagssegments und ein Beitrag des zweiten Bremsbelgassegments zum Reibprofil belastungsabhängig sind. Dadurch kann gezielt eingestellt werden, dass beispielsweise das erste Bremsbelagssegment verstärkt bei hohen Belastungen wirkt, während das zweite Bremsbelagssegment bei niedrigeren Belastungen wirkt. Dadurch lässt sich mit Vorteil die gesamte Bremsbacke weiter an die prognostizierten Belastungen anpassen.

Erfindungsgemäß ist es vorgesehen, dass das erste Bremsbelagssegment und das zweite Bremsbelagssegment reversibel und vorzugsweise voneinander unabhängig austauschbar sind, d. h. das erste Bremsbelagssegment und das zweite Bremsbelagssegment lassen sich, vorzugsweise jeweils einzeln, nach ihrer ersten Montage über einen entsprechenden Kopplungsmechanismus abnehmen und gegen andere Bremsbelagssegmente austauschen. Dadurch können mit Vorteil z. B. diejenigen Bremsbelagssegmente ausgetauscht werden, die sich schneller abnutzen, ohne alle Bremsbelagssegmente austauschen zu müssen. Außerdem lassen sich die Bremsbelagssegmente beispielsweise an andere Witterungsverhältnisse oder die Umstellung des Bremsverhaltens anpassen.

Für die Realisierung der reversiblen Austauschbarkeit ist ein Kopplungsmechanismus vorgesehen, wobei bremsbelagssegmentseitige Kopplungselemente mit trägerelementseitigen Kopplungselement lösbar zusammenwirken, beispielsweise form- und/oder kraftschlüssig. Dabei ist auch vorstellbar, dass das erste Bremsbelagssegment und/oder das zweite Bremsbelagssegment über einen Schnellspannmechanismus oder einen Bajonettverschluss mit dem Trägerelement lösbar verbindbar sind. Dadurch lassen sich das erste und das zweite Bremsbelagssegment mit wenigen Handgriffen vergleichsweise schnell montieren bzw. demontieren. Als Kopplungsmechanismus ist auch ein Clipmechanismus vorstellbar.

Weiterhin ist es vorstellbar, dass das Trägerelement derart ausgestaltet ist, dass es von der Bremsvorrichtung lösbar ist. So lässt sich das Trägerelement von der Bremsvorrichtung lösen und die einzelnen Bremsbelagssegmente lassen sich bequem austauschen.

In einer weiteren Ausführungsform der vorliegenden Erfindung ist es vorgesehen, dass am Trägerelement ein drittes Bremsbelagssegment als Reserve- bzw. Ersatzbremsbelagssegment angeordnet ist. Das dritte Bremsbelagssegment ist insbesondere so angeordnet, dass es im Betrieb keinen Beitrag zum Reibprofil liefert. Beispielswiese ist das dritte Bremsbelagssegment hierzu im Trägerelement gegenüber dem ersten Bremsbelagssegment und dem zweiten Bremsbelagssegment zurückversetzt angeordnet, insbesondere so zurückversetzt, dass beim Bremsen das dritte Bremsbelagssegment beabstandet ist zu einer Bremsscheibe oder einer Bremstrommel. Auf diese Weise lässt sich mit Vorteil ein ungenutztes Ersatzbremsbelagssegment mitführen, das bei Bedarf das erste oder zweite Bremsbelagssegment ersetzen kann.

Gemäß einer weiteren Ausführungsform der vorliegenden Erfindung ist vorgesehen, dass die Bremsbacke derart konfiguriert ist, dass in einem verbauten Zustand der Bremsbacke, in dem die Bremsvorrichtung mit der Bremsbacke an einem Rad mit einer Radachse verbaut ist, das erste Bremsbelagssegment bezogen auf die Radachse in einer radialen Richtung und/oder umlaufenden Richtung zum zweiten Bremsbelagssegment beabstandet ist. Dadurch lassen sich das erste Bremsbelagssegment und das zweite Bremsbelagssegment - abhängig vom gewünschten Reibprofil - in Reibrichtung gesehen übereinander und/oder hintereinander und/oder nebeneinander anordnen. Vorstellbar ist auch, dass das erste Bremsbelagssegment und das zweite Bremsbelagssegment in einem Muster, beispielsweise reihen- und/oder spaltenförmig, am Trägerelement angeordnet sind.

Zweckmäßig ist es vorgesehen, dass das erste Bremsbelagssegment und das zweite Bremsbelagssegment in radialer Richtung übereinander und/oder hintereinander und/oder nebeneinander angeordnet sind. Hierbei ergeben sich beispielsweise im Falle einer Scheibenbremse unterschiedliche Reibgeschwindigkeiten für das erste Bremsbelagssegment und das zweite Bremsbelagssegment, die wiederum Einfluss nehmen auf die jeweilige Reibwerthöhe und ein Temperaturverhalten des ersten Bremsbelagssegments und des zweiten Bremsbelagssegments. Vorzugsweise ist das erste Bremsbelagssegment auf einer der Radachse abgewandten Seite angeordnet und ist im Vergleich zum zweiten Bremsbelagssegment für höhere Reibgeschwindigkeiten ausgelegt, während das der Radachse zugewandte zweite Bremsbelagssegment im Vergleich zum ersten Bremsbelagssegment temperaturbeständiger ist.

Vorzugsweise ist es vorgesehen, dass ein in einer Richtung bemessener Abstand zwischen dem ersten Bremsbelagssegment und dem zweiten Bremsbelagssegment einen Wert zwischen dem 0,1- und 0,4-fachen, bevorzugt zwischen dem 0,08- und 0,25-fachen und besonders bevorzugt zwischen dem 0,05- und 0,13-fachen einer in dieselbe Richtung bemessenen Ausdehnung des ersten Bremsbelagssegments und des zweiten Bremsbelagssegments, d. h. der Summe aus dem ersten Bremsbelagssegment und dem zweiten Bremsbelagssegment, annimmt. Durch eine ausreichende Beabstandung lässt sich in vorteilhafter Weise verhindern, dass das erste und das zweite Bremsbelagssegment auf Dauer in Kontakt treten, wodurch die Ausbildung des Reibprofils eingeschränkt wird und ein Austauschen des ersten Bremsbelagssegments oder zweiten Bremsbelagssegments erschwert.

In einer weiteren Ausführungsform der vorliegenden Erfindung ist es vorgesehen, dass das erste Bremsbelagssegment das zweite Bremsbelagssegment zumindest teilweise, insbesondere vollständig, umgibt. Beispielsweise umrahmt das erste Bremsbelagssegment das zweite Bremsbelagssegment. Hierbei ist es vorstellbar, dass das zweite Bremsbelagssegment gegenüber dem ersten Bremsbelagssegment zurückversetzt ist und für eine Wirkverbindung zwischen dem zweiten Bremsbelagssegment und dem Widerlager, insbesondere einer Bremsscheibe oder Bremstrommel, entsprechend mehr Kraftaufwand erforderlich ist. Dadurch kann beispielsweis sichergestellt werden, dass das zweite Bremsbelagssegment erst im Falle eines intensiven Bremsvorgangs, d. h. oberhalb eines festgelegten Schwellenwerts, zum Reibprofil beiträgt. Ein gegenüber dem ersten Bremsbelagssegment zurückversetztes zweites Bremsbelagssegment lässt sich beispielsweise durch eine entsprechende Dimensionierung der Dicke des ersten Bremsbelagssegments und des zweiten Bremsbelagssegments realisieren. Vorstellbar ist auch, dass das Trägerelement einen rückspringenden Verlauf hat und das zweite Bremsbelagssegment im rückspringenden Bereich des Trägerelements montiert ist.

Bevorzugterweise ist es vorgesehen, dass das zweite Bremsbelagssegment aus einem Material mit einem höheren Reibwert als das erste Bremsbelagssegment ausgebildet ist. Wenn beispielsweise das zweite Bremsbelagssegment bevorzugt bei Vollbremsungen, d. h. einer Bremsung mit einer Bremsintensität oberhalb des Schwellenwerts, zum Einsatz gelangt, ist es vorteilhaft, dass bei diesen Bremsungen die Bremsbacke eine maximale Bremskraft erzeugt. Aus diesem Grund ist das zweite Bremsbelagssegment mit Vorteil aus einem Material mit höherem Reibwert ausgebildet, als das erste Bremsbelagssegment. Üblicherweise ist der Verschleiß eines Materials mit einem höherem Reibwert größer, als der Verschleiß eines Materials mit einem geringerem Reibwert, wobei es aus diesem Grund bevorzugt ist, das erste Bremsbelagssegment mit einem Material geringeren Reibwertes und damit auch geringem Verschleiß auszubilden, als den des zweiten Bremsbelagssegments.

Erfindungsgemäß ist es vorgesehen, dass der Reibwert des zweiten Bremsbelagssegments ein 2- bis 3-faches und bevorzugt ein 1,3- bis 1,7-faches des Reibwertes des ersten Bremsbelagssegments beträgt. Je nach Einsatzprofil, welches für den Belagsträger im Betrieb im Kraftfahrzeug erwartet wird, kann es bevorzugt sein, das zweite Bremsbelagssegment aus einem Material mit deutlich höherem oder nur geringfügig höherem Reibwert auszubilden. So kann beispielsweise das Material des zweiten Bremsbelagssegments den dreifachen Reibwert des Materials des ersten Bremsbelagssegments aufweisen, um bei einer Vollbremsung einen deutlich gesteigerten Gesamtreibwert, bzw. mittleren Reibwert der gesamten Bremsbacke beziehungsweise der gesamten Belagseinheit zu erzielen. In solchen Fällen nimmt der Reibwert des zweiten Bremsbelagssegments beispielsweise einen Wert zwischen dem 2- bis 3- fache des Reibwerts des ersten Bremsbelagssegments an. Andererseits kann es auch bevorzugt sein, dass das zweite Bremsbelagssegment aus einem Material nur geringfügig höherem Reibwertes ausgebildet ist, als das erste Bremsbelagssegment, wenn beispielsweise relativ häufige Vollbremsungen relativ zu den Teilbremsungen zu erwarten sind. In solchen Fällen nimmt der Reibwert des zweiten Bremsbelagssegments beispielsweise einen Wert zwischen dem 1,3 - bis 1,7- fache des Reibwerts des ersten Bremsbelagssegments an.

Zweckmäßig ist vorgesehen, dass das Trägerelement ein erstes Trägerelementsegment und ein zweite Trägerelementsegment aufweist, wobei das erste Bremselementsegment am ersten Trägerelementsegment und das zweite Bremselementsegment am zweiten Trägerelementsegment montierbar ist. Dadurch lassen sich das erste Bremsbelagssegment und das zweite Bremsbelagssegment unabhängig voneinander bewegen und entsprechend lässt sich eine zeitlich Änderung im räumlichen Reibprofil realisieren. Insbesondere lässt sich bedarfsabhängig steuern, wann und in welchen Ausmaß jeweils das erste Bremsbelagssegment und das zweite Bremsbelagssegment in Wirkverbindung mit dem Widerlager tritt. Vorzugsweise ist es vorgesehen, dass das erste Bremsbelagssegment und das zweite Bremsbelagssegment jeweils so dimensioniert bzw. ausgestaltet sind, dass das erste Bremsbelagssegment auf dem ersten Trägerelementsegment und das zweite Bremsbelagssegment auf dem zweiten Trägerelementsegment montiert sind, ohne überzustehen, insbesondere in einer parallel oder senkrecht zur Reibrichtung verlaufenden Richtung.

Gemäß einer weiteren Ausführungsform der vorliegenden Erfindung ist vorgesehen, dass das erste Trägerelementsegment und das zweite Trägerelementsegment voneinander entkoppelt sind. Durch die Entkopplung lassen sich das erste Trägerelementsegment und das zweite Trägerelementsegment und damit das erste Bremsbelagssegment und das zweite Bremsbelagssegment abhängig von der Lastsituation individuell einstellen. Insbesondere lässt sich abhängig von einer Bremsintensität steuern, ob das erste Bremsbelagssegment und das zweite Bremsbelagssegment bzw. nur das erste oder das zweite Bremsbelagssegment in Wirkverbindung mit dem Widerlager gebracht wird.

In einer vorteilhaften Ausführungsform der vorliegenden Erfindung ist vorgesehen, dass das erste Trägerelementsegment und/oder das zweite Trägerelementsegment mit einer Kraft, insbesondere mittels einer von einem Federelement ausgehenden Kraft, welche in Richtung des Widerlagers (d. h. der Bremsscheibe odertrommel) wirkt, beaufschlagbar ist. Dadurch lässt sich beispielsweise einstellen, wie wieviel Kraft aufgewandt werden muss, bis das erste Bremsbelagssegment und das zweite Bremsbelagssegment in Wirkverbindung mit dem Widerlager tritt. Hierzu lassen sich das erste Trägerelementsegment und das zweite Trägerelementsegment jeweils individuell mit einer Kraft beaufschlagen oder es ist vorgesehen, dass das erste Trägerelement ein erstes Federelement und das zweite Trägerelementsegment ein zweites Federelement aufweist, wobei sich das erste Federelement und das zweite Federelement in Hinblick auf ihre Rückstellkraft unterscheiden. Dadurch wirken beim Anpressen des ersten und des zweiten Bremsbelagssegments unterschiedliche Rückstellkräfte auf die jeweiligen Bremsbelagssegmente, wodurch sich verschiedene Reibwerte für das erste Bremsbelagssegment und das zweite Bremsbelagssegment einstellen. Vorzugsweise ist das Verhältnis der Rückstellkraft des ersten Federelements um einen Faktor zwischen 1,2 und 8-mal, bevorzugt zwischen 2 und 6-mal so groß und besonders bevorzugt zwischen 3,5 und 5,5-mal größer als die Rückstellkraft des zweiten Federelements. Dadurch muss erst der Rückstellkraft des ersten Federelements am ersten Trägerelementsegment entgegengewirkt werden, bevor das zweite Federelement des ersten Trägerelementsegments wirkungsvoll mit dem Widerlager in Kontakt tritt.

Weiterhin ist es vorzugsweise vorgesehen, dass ein Verhältnis der Reibfläche des ersten Bremsbelagssegments zu der Reibfläche des zweiten Bremsbelagssegments einen Wert zwischen 1 und 7,5, bevorzugt zwischen 1 und 4,3 und besonders bevorzugt zwischen 1 und 2,2 annimmt. Dadurch lässt sich in vorteilhafter Weise die Größe des zweiten Bremsbelagssegments an den jeweiligen, vom Einsatzfall abhängigen Bedarf einstellen.

In einer weiteren vorteilhaften Ausführungsform der vorliegende Erfindung ist vorgesehen, dass das erste Bremsbelagssegment und/oder das zweite Bremsbelagssegment in einer parallel zum Trägerelement verlaufenden Ebene einen kreis-, einen polygonalen, einen dreieckigen und/oder einen elliptischen Querschnitt aufweist.

Vorzugsweise ist es vorgesehen, dass die Form und/oder Materialzusammensetzung des ersten Bremsbelagssegments und/oder des zweiten Bremsbelagssegments abhängt von der im Betrieb zu erwartenden Temperaturentwicklung oder Reibgeschwindigkeit im Einsatzbereich. Dadurch werden in vorteilhafter Weise im Betrieb der Bremsvorrichtung auftretende Phänomene bei der Gestaltung des ersten Bremsbelagssegments und des zweiten Bremsbelagssegments berücksichtigt.

Ein weiterer Gegenstand der vorliegenden Erfindung ist ein System zum modularen Zusammensetzen einer Bremsbacke umfassend ein Trägerelement, ein erstes Bremsbelagssegment und ein zweite Bremsbelagssegment zur Montage am Trägerelement. Alle für die erfindungsgemäße Bremsbacke beschriebenen Merkmale und deren Vorteile lassen sich sinngemäß ebenfalls auf das erfindungsgemäße System übertragen und andersherum.

Zudem wird die Aufgabe gelöst durch eine Bremsvorrichtung, insbesondere Trommelbremse oder Scheibenbremse, mit einer erfindungsgemäßen Bremsbacke. Alle für die erfindungsgemäße Bremsbacke beschriebenen Merkmale und deren Vorteile lassen sich sinngemäß ebenfalls auf die erfindungsgemäße Bremsvorrichtung übertragen und andersherum.

Ein weiterer Gegenstand der vorliegenden Erfindung ist ein Verfahren zur Herstellung einer Bremsbacke, insbesondere gemäß einem der vorhergehenden Ansprüche, umfassend:
-- Breitstellen eines Trägerelements, eines ersten Bremsbelagssegments und eines zweiten sich vom ersten Bremsbelagssegment in Hinblick auf Form, und /oder Materialzusammensetzung unterscheidendbares Bremsbelagssegments und
-- Fixieren des ersten Bremsbelagssegments und des zweiten Bremsbelagssegments am Trägerelement, wobei das erste Bremsbelagssegment beabstandet zum zweiten Bremsbelagssegment angeordnet wird. Alle für die erfindungsgemäße Bremsbacke beschriebenen Merkmale und deren Vorteile lassen sich sinngemäß ebenfalls auf das erfindungsgemäße Verfahren übertragen und andersherum. Vorzugsweise werden das erste Bremsbelagssegments und das zweite Bremsbelagssegment derart am Trägerelement befestigt, dass sie sich in ihrer Kraftbeaufschlagung voneinander unterscheiden.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig.1:**: eine Bremsbacke in einer ersten bevorzugten Ausführungsform der vorliegenden Erfindung in einer Draufsichtung und in einer Schnittansicht
- **Fig. 2:**: eine Bremsbacke in einer zweiten bevorzugten Ausführungsform der vorliegenden Erfindung in einer Draufsichtung und in einer Schnittansicht
- **Fig. 3:**: eine Bremsbacke in einer dritten bevorzugten Ausführungsform der vorliegenden Erfindung in einer Draufsichtung und in einer Schnittansicht
- **Fig. 4a bis 4c:**: eine Bremsbacke in einer vierten, fünften und sechsten bevorzugten Ausführungsform der vorliegende Erfindung in einer Draufsicht

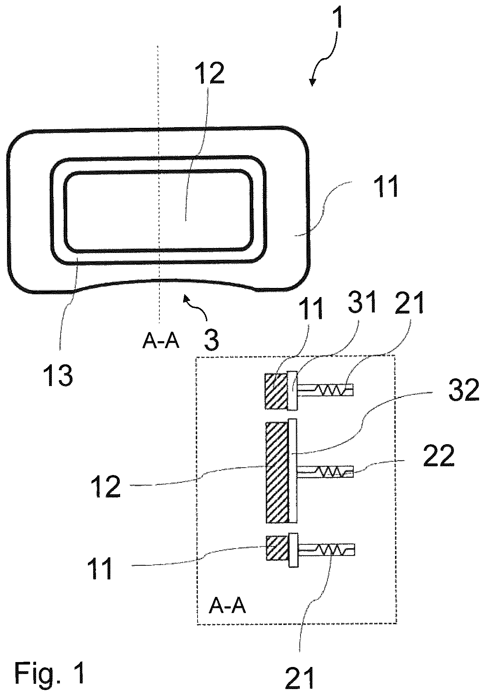

In **Figur 1** ist eine Bremsbacke 1 in einer ersten bevorzugten Ausführungsform der vorliegenden Erfindung in einer Draufsichtung und in einer Schnittansicht entlang einer eingetragenen A-A-Schnittlinie dargestellt. Insbesondere handelt es sich um eine Bremsbacke 1, die für eine Bremsvorrichtung, wie z. B. eine Scheibenbremse oder Trommelbremse, vorgesehen ist. Solche Bremsvorrichtungen sind beispielsweise an um eine Radachse rotierenden Rädern von Nutzfahrzeugen verbaut, um bei Bedarf in einem Bremszustand der Rotation des Rads entgegenzuwirken. Hierzu tritt im Bremszustand ein Bremsbelag auf der Bremsbacke mit einem Widerlager, beispielsweise einer Scheibenwand oder Bremstrommelwand, die drehfest mit dem Rad verbunden ist, in Wirkverbindung. Zur möglichst optimalen Anpassung des Reibprofils an die jeweilige Bremsvorrichtung, insbesondere an dessen Einsatzfeld, ist es vorgesehen, dass die Bremsbacke 1 ein erstes Bremselementsegment 11 und ein im montierten Zustand ein zum ersten Bremsbelagssegment 11 beabstandetes zweites Bremsbelagssegment 12 aufweist. Insbesondere ist es vorgesehen, dass sich das erste Bremsbelagssegment 11 und das zweite Bremsbelagssegment 12, vorzugsweise abhängig von der Bremsvorrichtung bzw. des Einsatzfeldes der Bremsvorrichtung, unterscheiden. In der dargestellten Ausführungsform ist ein rahmenförmiges erstes Bremsbelagssegment 11 vorgesehen, in dessen umrahmtem Bereich ein zweites rechteckförmiges Bremsbelagssegment 12 angeordnet ist.

Zur weiteren Anpassung des Reibprofils entlang der Bremsbacke 1, ist es vorgesehen, dass das erste Bremsbelagssegment 11 an einem ersten Trägerelementsegment 31 und das zweite Bremsbelagssegment 12 an einem zweiten Trägerelementsegment 32 angeordnet ist. Hierbei ist bevorzugt das erste Trägerelementsegment 31 an die Form des ersten Bremsbelagssegments 11 und/oder das zweite Trägerelementsegment 32 an die Form des zweiten Bremsbelagssegments 12 angepasst. Dabei sind das erste Trägerelementsegment 31 und das zweite Trägerelementsegment 32 voneinander entkoppelt und derart ausgestaltet, dass sie jeweils unabhängig voneinander versetzt bzw. verschoben werden können. Vorzugsweise lassen sich das erste Trägerelementsegment 31 und das zweite Trägerelementsegment 32 unabhängig voneinander mit unterschiedlich großen Kräften beaufschlagen, so dass über die unterschiedlichen Kräfte jeweils unterschiedliche Reibwiderstände beim Bremsen vom ersten Bremsbelagssegment 11 und dem zweiten Bremsbelagssegment 12 veranlasst werden. Vorzugsweise ist eine Steuervorrichtung vorgesehen, die derart ausgestaltet ist, dass das erste Trägerelementsegment 31 und das zweite Trägerelementsegment 32 abhängig von einer Art des Betätigens der Bremsvorrichtung jeweils mit einer vorbestimmten Kraft beaufschlagt werden. Mit anderen Worten: Abhängig von einer Bremsintensität ändert sich das Verhältnis zwischen einer auf das erste Trägerelementsegment 31 wirkenden ersten Kraft und einer auf das zweite Trägerelementsegment 32 wirkenden zweiten Kraft. Hierbei ist es vorstellbar, dass sich beispielsweise das Kräfteverhältnis beim Überschreiten eines Schwellenwerts für die Bremsintensität umkehrt. Denkbar ist auch, dass das erste Trägerelementsegment 31 unterhalb eines weiteren Schwellenwerts für die Bremsintensität inaktiv bleibt und das zweite Trägerelementsegment 31 mit einer zweiten Kraft beaufschlagt wird, während das erste Trägerelementsegment 31 oberhalb des weiteren Schwellenwerts zusätzlich zum zweiten Trägerelementsegment 21 mit einer ersten Kraft beaufschlagt wird. Weiterhin ist es bevorzugt vorgesehen, dass das erste Trägerelementsegment 31 mit einem ersten Federelement 21 und das zweite Trägerelementsegment 31 mit einem zweiten Federelement 22 vorgespannt bzw. beaufschlagt sind, so dass jeweils unterschiedliche Kräfte auf das erste Trägerelementsegment 31 und das zweite Trägerelementsegment 32 wirken, wenn das erste Bremsbelagssegment 11 und das zweite Bremsbelagssegment 12 beim Bremsen in Wirkverbindung mit dem Widerlager, z. B. einer Scheibe oder einer Bremstrommel, treten.

Weiterhin ist es im Ausführungsbeispiel der **Figur 1** vorgesehen, dass der erste Bremsbelagssegment 11 und das ersten Trägerelementsegment 31 an einer Seite eine Wölbung 3 aufweisen, wobei die Wölbung 3 vorzugsweise mit einer Form des Widerlagers, mit dem das erste Bremsbelagssegment 11 beim Bremsen in Wirkverbindung tritt, abgestimmt ist.

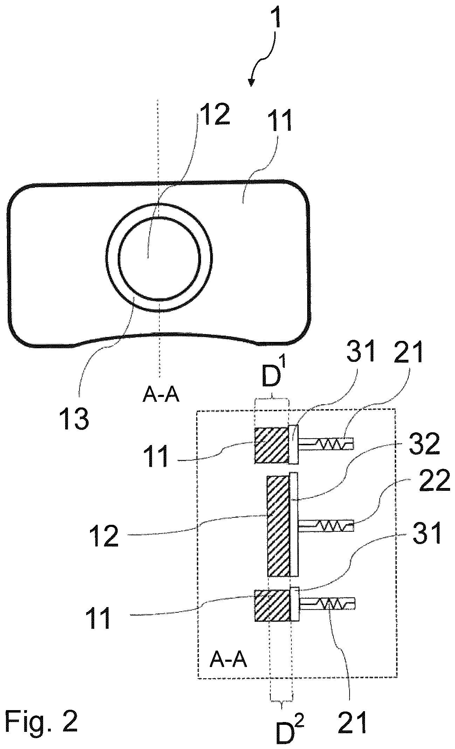

In der **Figur 2** ist eine Bremsbacke 1 in einer zweiten bevorzugten Ausführungsform der vorliegenden Erfindung in einer Draufsichtung und in einer Schnittansicht entlang einer eingetragenen A-A-Schnittlinie dargestellt. Im Wesentlichen stimmt dabei die Bremsbacke 1 mit der aus der Figur 1 überein und unterscheidet sich nur durch die Form des ersten Bremsbelagssegments 11 und des zweiten Bremsbelagssegments 12 sowie im Verhältnis der Dicke D¹ des ersten Bremsbelagssegments 11 zur Dicke D² des zweiten Bremsbelagssegments 12. Insbesondere umfasst das erste Bremsbelagssegment 11 im Zentrum eine kreisförmige Aussparung, innerhalb der das zweite Bremsbelagssegment 12, das ebenfalls kreisförmig ausgestaltet ist, angeordnet ist. Weiterhin ist es vorgesehen, dass eine entlang einer senkrecht zur Haupterstreckung des Trägerelements verlaufenden Richtung bemessene Dicke D¹ des ersten Bremsbelagssegments 11 dicker ist als die Dicke D² des zweiten Bremsbelagssegments 12. Insbesondere ist das erste Bremsbelagssegment 1,8- bis 2,3- fach, besonders 1,5 bis 2-fach und besonders bevorzugt 1,3- bis 1,7- fach dicker als das zweite Bremsbelagssegment 12. Durch das dicker ausgestaltete erste Bremsbelagssegment 11 muss das zweite Bremsbelagssegment 12 eine weitere Wegstrecke zurücklegen, um mit dem Widerlager in Kontakt zu treten. Hierzu ist vorzugsweise ein im Vergleich zum ersten Bremsbelagssegment 11 größerer Kraftaufwand notwendig, der beispielsweise nur bei einer intensiven Betätigung, z. B. bei einem vergleichsweise harten Bremsvorgang, aufgebracht wird. Dadurch lässt sich in der dargestellten Ausführungsform beispielsweise das zweite Bremsbelagssegment 12 nur in Ausnahmesituationen nutzen, wodurch dessen Abnutzung in vorteilhafter Weise reduziert wird.

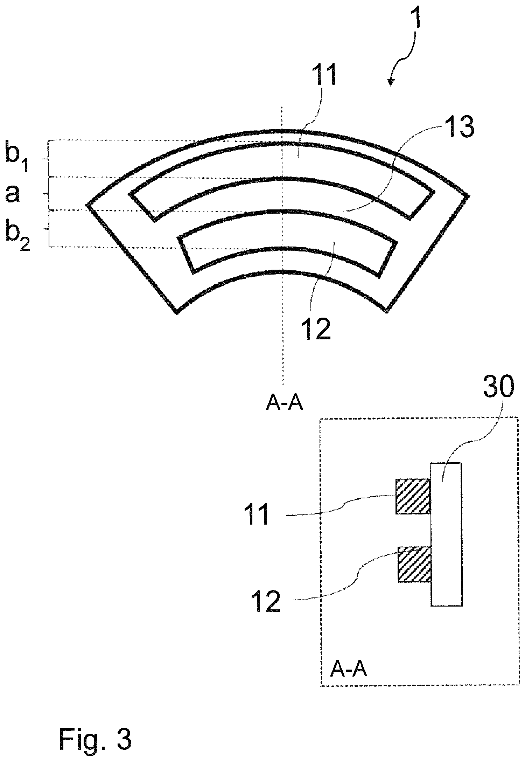

In der **Figur 3** ist eine Bremsbacke 1 in einer dritten bevorzugten Ausführungsform der vorliegenden Erfindung in einer Draufsichtung und in einer Schnittansicht dargestellt. Hierbei ist es vorgesehen, dass das erste Bremsbelagssegment 11 und das zweite Bremsbelagssegment 12 auf einem gemeinsamen Trägerelement 30 angeordnet sind. Insbesondere sind das erste Bremsbelagssegment 11 und das zweite Bremsbelagssegment 12 als teilringförmige Streifen ausgestaltet, die im verbauten Zustand in radialer Richtung übereinander angeordnet sind. Vorzugsweise sind das erste Bremsbelagssegment 11 und das zweite Bremsbelagssegment 12 durch einen Spalt 13 getrennt. Insbesondere ist es vorgesehen, dass ein in einer Richtung bemessener Abstand zwischen dem ersten Bremsbelagssegment und dem zweiten Bremsbelagssegment einen Wert zwischen dem 0,1- und 0,4- fachen, bevorzugt zwischen dem 0,08- und 0,25- fachen und besonders bevorzugt zwischen dem 0,05- und 0,13- fachen einer in dieselbe Richtung bemessenen Ausdehnung b₁ , b₂ des ersten Bremsbelagssegments 11 und des zweiten Bremsbelagssegments 12, d. h. einer Summe aus einer Breite b₁ des ersten Bremsbelagssegments 11 und einer Breite b₂ des zweiten Bremsbelagssegment 12, annimmt. Vorzugsweise wird der Abstand a im verbauten Zustand der Bremsvorrichtung in radialer Richtung bemessen.

In dem dargestellten Ausführungsbeispiel in der Figur 3 treten beim Bremsen das erste teilringförmige Bremsbelagssegment 11 und das zweite teilringförmige Bremsbelagssegment 12 umlaufend mit dem Widerlager in Kontakt, wobei dem ersten Bremsbelagssegment 11 ein erster Radius und dem zweiten Bremsbelagssegment 12 ein zweiter Radius zuzuordnen ist. Da der erste Radius größer ist als der zweite Radius kommt es zu unterschiedlichen Reibgeschwindigkeiten für das erste Bremsbelagssegment 11 und das zweite Bremsbelagssegment 12. Entsprechend unterschiedlich sind das Temperaturverhalten und eine Reibwerthöhe des ersten Bremsbelagssegments 11 und des zweiten Bremsbelagssegments 12, was im Betrieb wiederum Einfluss nimmt auf die Bremsleistung der gesamten Bremsbacke 1. Durch eine Materialzusammensetzung für das erste Bremsbelagssegment 11 und das zweite Bremsbelagssegment 12, insbesondere abhängig vom zu erwartenden Reibgeschwindigkeitsunterschied bzw. Temperaturverhaltensunterschied zwischen dem Bereich für das erste Bremsbelagssegment 11 und das zweite Bremsbelagssegment 12, ist es in vorteilhafter Weise möglich, das gesamte Reibprofil der Bremsbacke 1 zu optimieren. Vorzugsweise ist es vorgesehen, dass das erste Bremsbelagssegment 11 für vergleichsweise hohe Reibgeschwindigkeiten und das zweite Bremsbelagssegment 12 vergleichsweise temperaturbeständig ausgelegt wird.

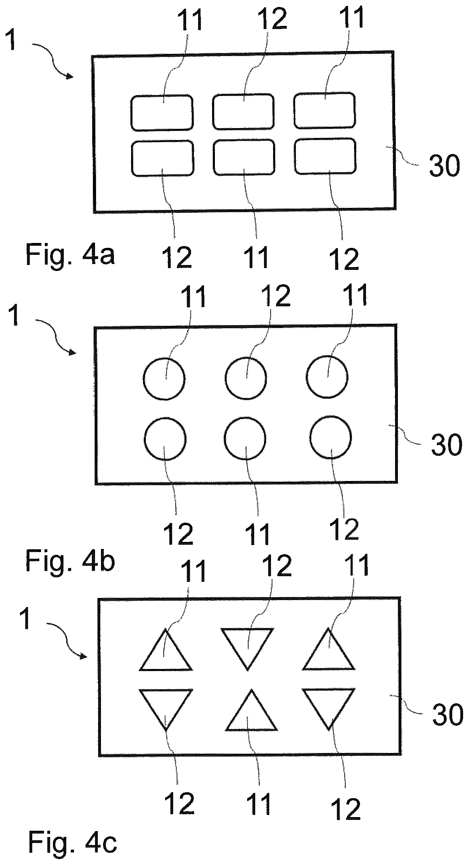

In den **Figuren 4a bis 4c** sind Bremsbacken 1 in einer vierten, fünften und sechsten bevorzugten Ausführungsform der vorliegenden Erfindung in einer Draufsicht dargestellt. Dabei ist es insbesondere vorgesehen, dass das erste Bremsbelagssegment 11 und das zweite Bremsbelagssegment 12 in einem Muster, insbesondere einem Muster mit Reihen und Spalten, beispielsweise in einem Matrix- oder schachbrettartigen Muster, angeordnet sind. Dabei sind das erste Bremsbelagssegment 11 und das zweite Bremsbelagssegment 12 in der Figur 4a rechteckig, in der Figur 4b kreisförmig und in der Figur 4c dreiecksförmig ausgestaltet, wobei die in Figur 4c gezeigten Dreiecke entlang der Reihe, in der sie angeordnet sind, ihre Ausrichtung abwechseln.

Insbesondere ist es vorgesehen, dass ein Verhältnis aus ersten Bremsbelagssegmenten 11 und zweiten Bremsbelagssegmenten 12 in einer von der Radachse abgewandten Reihe umgekehrt ist zu dem Verhältnis aus ersten Bremsbelagssegmenten 11 und zweiten Bremsbelagssegmenten 12 einer der Radachse zugewandten Reihe. Dadurch lässt sich die Anzahl an ersten Bremsbelagssegmenten 11 und zweiten Bremsbelagssegmenten 12 entsprechend der zu erwartenden Belastung anpassen. Bevorzugt ist das Verhältnis aus erstem Bremsbelagssegment 11 und zweitem Bremsbelagssegment 12 in von der Radachse abgewandten Reihe zudem in der der Radachse zugewandten Reihe 1:2, 1:3 oder 2:3 oder umgekehrt.

### Bezugszeichenliste

- 1: Bremsbacke
- 11: erstes Bremsbelagssegment
- 12: zweites Bremsbelagssegment
- 13: Spalt
- 21: erstes Federelement
- 22: zweites Federelement
- 30: Trägerelement
- 31: erstes Trägerelementsegment
- 32: zweites Trägerelementsegment
- a: Abstand
- b₁: Breite des ersten Bremsbelagssegments
- b₂: breite des zweiten Bremsbelagssegments
- D¹: erste Dicke
- D²: zweite Dicke

## Patentansprüche

1. Bremsbacke (1) mit Bremsbelägen für eine Scheibenbremse umfassend
ein Trägerelement (30), und
ein am Trägerelement (30) montierbares erstes Bremsbelagssegment (11) und ein am Trägerelement (30) montierbares zweites Bremsbelagssegment (12),
wobei das erste Bremsbelagssegment (11) und das zweite Bremsbelagssegment (12) zur Ausbildung eines Reibprofils unterschiedlich ausgebildet sind, insbesondere sich in Hinblick auf Materialzusammensetzung, Kraftbeaufschlagung und/oder Form voneinander unterscheiden,
wobei das erste Bremsbelagssegment (11) und das zweite Bremsbelagssegment (12) reversibel austauschbar sind,
**dadurch gekennzeichnet, dass** der Reibwert des zweiten Bremsbelagssegments ein 2- bis 3-faches des Reibwertes des ersten Bremsbelagssegments beträgt.

2. Bremsbacke gemäß Anspruch 1, wobei das erste Bremsbelagssegment (11) und das zweite Bremsbelagssegment (12) in einem montierten Zustand zueinander beabstandet sind.

3. Bremsbacke (1) gemäß einem der vorhergehenden Ansprüche, welche derart konfiguriert ist, dass in einem verbauten Zustand der Bremsvorrichtung, in dem die Bremsvorrichtung mit der Bremsbacke (1) an einem Rad mit einer Radachse verbaut ist, das erste Bremsbelagssegment (11) bezogen auf die Radachse in einer radialen Richtung und/oder umlaufenden Richtung zum zweiten Bremsbelagssegment (12) beabstandet ist.

4. Bremsbacke (1) gemäß einem der vorhergehenden Ansprüche, wobei ein in einer Richtung bemessener Abstand zwischen dem ersten Bremsbelagssegment (11) und dem zweiten Bremsbelagssegment (12) einen Wert zwischen dem 0,1- und 0,4-fachen, bevorzugt zwischen dem 0,08- und 0,25-fachen und besonders bevorzugt zwischen dem 0,05- und 0,13-fachen einer in dieselbe Richtung bemessenen Ausdehnung (b₁, b₂) des ersten Bremsbelagssegments (11) und des zweiten Bremsbelagssegments (12) annimmt.

5. Bremsbacke (1) gemäß einem der vorhergehenden Ansprüche, wobei das erste Bremsbelagssegment (11) das zweite Bremsbelagssegment (12) zumindest teilweise, insbesondere vollständig, umgibt.

6. Bremsbacke (1) gemäß einem der vorhergehenden Ansprüche, wobei das erste Bremsbelagssegment (11) aus einem Material mit einem höheren Reibwert als das zweite Bremsbelagssegment (12) ausgebildet ist.

7. Bremsbacke (1) gemäß einem der vorhergehenden Ansprüche, wobei das Trägerelement (30) ein erstes Trägerelementsegment (31) und ein zweites Trägerelementsegment (32) aufweist, wobei das erste Bremselementsegment (11) am ersten Trägerelementsegment (31) und das zweite Bremselementsegment (12) am zweiten Trägerelementsegment (32) montierbar ist.

8. Bremsbacke (1) gemäß Anspruch 7, wobei das erste Trägerelementsegment (31) und/oder das zweite Trägerelementsegment (32) mit einer Kraft, insbesondere mittels einer von einem Federelement (21, 22) ausgehenden Kraft, beaufschlagbar ist.

9. Bremsbacke (1) gemäß einem der vorhergehenden Ansprüche, wobei ein Verhältnis der Reibfläche des ersten Bremsbelagssegments (11) zu der Reibfläche des zweiten Bremsbelagssegments (12) einen Wert zwischen 1 und 7,5, bevorzugt zwischen 1 und 4,3 und besonders bevorzugt zwischen 1 und 2,2 annimmt.

10. Bremsbacke gemäß einem der vorhergehenden Ansprüche, wobei ein Beitrag des ersten Bremsbelagssegments (11) und ein Beitrag des zweiten Bremsbelgassegments (12) zum Reibprofil belastungsabhängig ist.

11. Bremsbacke gemäß einem der vorhergehenden Ansprüche, wobei am Trägerelement ein drittes Bremsbelagssegment als Reserve- bzw. Ersatzbremsbelagssegment angeordnet ist.

12. System zum modularen Zusammensetzen einer Bremsbacke (1) umfassend
-- ein Trägerelement (30) und
-- ein erstes Bremsbelagssegment (11) und ein zweites Bremsbelagssegment (12) zur Montage am Trägerelement (30),
wobei das erste Bremsbelagssegment (11) und das zweite Bremsbelagssegment (12) reversibel austauschbar sind,
**dadurch gekennzeichnet, dass** der Reibwert des zweiten Bremsbelagssegments ein 2- bis 3-faches des Reibwertes des ersten Bremsbelagssegments beträgt.

13. Bremsvorrichtung (1) mit einer Bremsbacke (1) gemäß einem der Ansprüche 1 bis 11.

14. Verfahren zur Herstellung einer Bremsbacke (1), insbesondere gemäß einem der vorhergehenden Ansprüche, umfassend:
-- Breitstellen eines Trägerelements (30), eines ersten Bremsbelagssegments (11) und eines zweiten sich vom ersten Bremsbelagssegment (11) in Hinblick auf Form oder Materialzusammensetzung unterscheidbaren zweiten Bremsbelagssegments (12) und
-- Fixieren des ersten Bremsbelagssegment (11) und des zweiten Bremsbelagssegments (12) am Trägerelement (30) zur Ausbildung eines Reibprofils, wobei das erste Bremsbelagssegment (11) beabstandet zum zweiten Bremsbelagssegment (12) angeordnet wird,
wobei das erste Bremsbelagssegment (11) und das zweite Bremsbelagssegment (12) reversibel austauschbar sind,
wobei der Reibwert des zweiten Bremsbelagssegments ein 2- bis 3-faches des Reibwertes des ersten Bremsbelagssegments beträgt.

## Claims

1. A brake shoe (1) with brake pads for a disc brake comprising a carrier element (30), and
a first brake pad segment (11) mountable on the carrier element (30) and a second brake pad segment (12) mountable on the carrier element (30), wherein the first brake pad segment (11) and the second brake pad segment (12) are differently formed to form a friction profile, in particular differ from one another with respect to material composition, force application and/or shape, wherein the first brake pad segment (11) and the second brake pad segment (12) are reversibly exchangeable,
**characterised in that** the coefficient of friction of the second brake pad segment is 2 to 3 times the coefficient of friction of the first brake pad segment.

2. The brake shoe according to claim 1, wherein the first brake pad segment (11) and the second brake pad segment (12) are spaced apart from each other in an assembled state.

3. The brake shoe (1) according to any one of the preceding claims, which is configured in such a way that in an installed state of the brake device, in which the brake device is installed with the brake shoe (1) on a wheel with a wheel axle, the first brake pad segment (11) is spaced apart from the second brake pad segment (12) in a radial direction and/or circumferential direction relative to the wheel axle.

4. The brake shoe (1) according to any one of the preceding claims, wherein a distance dimensioned in one direction between the first brake pad segment (11) and the second brake pad segment (12) assumes a value between 0.1 and 0.4 times, preferably between 0.08 and 0.25 times and more preferably between 0.05 and 0.13 times an extension (b1, b2) of the first brake pad segment (11) and the second brake pad segment (12) dimensioned in the same direction.

5. The brake shoe (1) according to any one of the preceding claims, wherein the first brake pad segment (11) surrounds the second brake pad segment (12) at least partially, in particular completely.

6. The brake shoe (1) according to any one of the preceding claims, wherein the first brake pad segment (11) is formed from a material with a higher coefficient of friction than the second brake pad segment (12).

7. The brake shoe (1) according to any one of the preceding claims, wherein the carrier element (30) comprises a first carrier element segment (31) and a second carrier element segment (32), the first brake element segment (11) being mountable on the first carrier element segment (31) and the second brake element segment (12) being mountable on the second carrier element segment (32).

8. The brake shoe (1) according to claim 7, wherein the first carrier element segment (31) and/or the second carrier element segment (32) can be subjected to a force, in particular by means of a force emanating from a spring element (21, 22).

9. The brake shoe (1) according to any one of the preceding claims, wherein a ratio of the friction surface of the first brake pad segment (11) to the friction surface of the second brake pad segment (12) assumes a value between 1 and 7.5, preferably between 1 and 4.3 and more preferably between 1 and 2.2.

10. The brake shoe according to any one of the preceding claims, wherein a contribution of the first brake pad segment (11) and a contribution of the second brake pad segment (12) to the friction profile is load-dependent.

11. The brake shoe according to any one of the preceding claims, wherein a third brake pad segment is arranged on the carrier element as a reserve or replacement brake pad segment.

12. A system for modular assembly of a brake shoe (1) comprising
-- a carrier element (30) and
-- a first brake pad segment (11) and a second brake pad segment (12) for mounting on the carrier element (30),
wherein the first brake pad segment (11) and the second brake pad segment (12) are reversibly exchangeable,
**characterised in that** the coefficient of friction of the second brake pad segment is 2 to 3 times the coefficient of friction of the first brake pad segment.

13. A brake device (1) with a brake shoe (1) according to any one of claims 1 to 11.

14. A method for manufacturing a brake shoe (1), in particular according to any one of the preceding claims, comprising:
-- providing a carrier element (30), a first brake pad segment (11) and a second brake pad segment (12) which is distinguishable from the first brake pad segment (11) with respect to shape or material composition, and
-- fixing the first brake pad segment (11) and the second brake pad segment (12) to the carrier element (30) to form a friction profile, the first brake pad segment (11) being arranged at a distance from the second brake pad segment (12),
wherein the first brake pad segment (11) and the second brake pad segment (12) are reversibly exchangeable,
wherein the coefficient of friction of the second brake pad segment is 2 to 3 times the coefficient of friction of the first brake pad segment.

## Revendications

1. Mâchoire de frein (1) comportant des garnitures de frein pour un frein à disque, comportant
un élément porteur (30) et
un premier segment de garniture de frein (11) susceptible d'être monté sur l'élément porteur (30) et
un second segment de garniture de frein (12) susceptible d'être monté sur l'élément porteur (30),
dans laquelle
le premier segment de garniture de frein (11) et le second segment de garniture de frein (12) sont réalisés différemment en vue de réaliser un profil de friction et diffèrent l'un de l'autre en particulier à l'égard de la composition des matériaux, de l'application des forces et/ou de leurs formes,
le premier segment de garniture de frein (11) et le second segment de garniture de frein (12) étant interchangeables de façon réversible,
**caractérisée en ce que**
le coefficient de friction du second segment de garniture de frein est 2 à 3 fois le coefficient de friction du premier segment de garniture de frein.

2. Mâchoire de frein selon la revendication 1,
dans laquelle
le premier segment de garniture de frein (11) et le second segment de garniture de frein (12) sont espacés l'un de l'autre dans un état monté.

3. Mâchoire de frein (1) selon l'une des revendications précédentes,
qui est configurée de telle sorte que dans un état monté du dispositif de frein dans lequel le dispositif de frein ayant la mâchoire de frein (1) est monté sur une roue ayant un essieu, le premier segment de garniture de frein (11) est espacé du second segment de garniture de frein (12) par rapport à l'essieu dans une direction radiale et/ou dans une direction périphérique.

4. Mâchoire de frein (1) selon l'une des revendications précédentes,
dans laquelle
une distance mesurée dans une direction entre le premier segment de garniture de frein (11) et le second segment de garniture de frein (12) prend une valeur comprise entre 0,1 et 0,4 fois, de préférence entre 0,08 et 0,25 fois, de manière particulièrement préférée entre 0,05 et 0,13 fois une extension (b₁, b₂), mesurée dans la même direction, du premier segment de garniture de frein (11) et du second segment de garniture de frein (12).

5. Mâchoire de frein (1) selon l'une des revendications précédentes,
dans laquelle
le premier segment de garniture de frein (11) entoure au moins partiellement, en particulier complètement le second segment de garniture de frein (12).

6. Mâchoire de frein (1) selon l'une des revendications précédentes,
dans laquelle
le premier segment de garniture de frein (11) est réalisé en un matériau ayant un coefficient de friction supérieur à celui du second segment de garniture de frein (12).

7. Mâchoire de frein (1) selon l'une des revendications précédentes,
dans laquelle
l'élément porteur (30) comprend un premier segment d'élément porteur (31) et un second segment d'élément porteur (32), le premier segment de garniture de frein (11) pouvant être monté sur le premier segment d'élément porteur (31) et le second segment de garniture de frein (12) pouvant être monté sur le second segment d'élément porteur (32).

8. Mâchoire de frein (1) selon la revendication 7,
dans laquelle
le premier segment d'élément porteur (31) et/ou le second segment d'élément porteur (32) peut/peuvent être sollicité(s) par une force, en particulier par une force émanant d'un élément ressort (21, 22).

9. Mâchoire de frein (1) selon l'une des revendications précédentes,
dans laquelle
un rapport de la surface de friction du premier segment de garniture de frein (11) sur la surface de friction du second segment de garniture de frein (12) prend une valeur comprise entre 1 et 7,5, de préférence entre 1 et 4,3 et de manière particulièrement préférée entre 1 et 2,2.

10. Mâchoire de frein selon l'une des revendications précédentes,
dans laquelle
une contribution du premier segment de garniture de frein (11) et une contribution du second segment de garniture de frein (12) au profil de friction est/sont fonction de la charge.

11. Mâchoire de frein selon l'une des revendications précédentes,
dans laquelle
un troisième segment de garniture de frein est disposé sur l'élément porteur à titre de segment de garniture de frein de réserve ou de remplacement.

12. Système d'assemblage modulaire d'une mâchoire de frein (1), comportant
-- un élément porteur (30) et
-- un premier segment de garniture de frein (11) et un second segment de garniture de frein (12) destinés à être montés sur l'élément porteur (30), dans lequel
le premier segment de garniture de frein (11) et le second segment de garniture de frein (12) sont interchangeables de façon réversible,
**caractérisé en ce que**
le coefficient de friction du second segment de garniture de frein est 2 à 3 fois le coefficient de friction du premier segment de garniture de frein.

13. Dispositif de frein (1) comprenant une mâchoire de frein (1) selon l'une des revendications 1 à 11.

14. Procédé de réalisation d'une mâchoire de frein (1), en particulier selon l'une des revendications précédentes, comprenant les étapes consistant à :
-- fournir un élément porteur (30), un premier segment de garniture de frein (11) et un second segment de garniture de frein (12) qui diffère du premier segment de garniture de frein (11) à l'égard de la forme ou de la composition des matériaux, et
-- fixer le premier segment de garniture de frein (11) et le second segment de garniture de frein (12) à l'élément porteur (30) en vue de réaliser un profil de friction, le premier segment de garniture de frein (11) étant disposé à distance du second segment de garniture de frein (12),
le premier segment de garniture de frein (11) et le second segment de garniture de frein (12) étant interchangeables de façon réversible, et
le coefficient de friction du second segment de garniture de frein étant 2 à 3 fois le coefficient de friction du premier segment de garniture de frein.
